Europäisches Patentamt

European Patent Office

Office européen des brevets

(11) Veröffentlichungsnummer: **0 058 439**
**B1**

(12) **EUROPÄISCHE PATENTSCHRIFT**

(45) Veröffentlichungstag der Patentschrift: **13.04.88**

(21) Anmeldenummer: **82200071.7**

(22) Anmeldetag: **21.01.82**

(51) Int. Cl.⁴: **F 16 L 51/02,** F 16 L 27/02

(54) **Kardanische Rohrverbindung mit Längsdehnungsausgleich.**

(30) Priorität: **17.02.81 CH 1022/81**

(43) Veröffentlichungstag der Anmeldung:
**25.08.82 Patentblatt 82/34**

(45) Bekanntmachung des Hinweises auf die
Patenterteilung:
**13.04.88 Patentblatt 88/15**

(84) Benannte Vertragsstaaten:
**AT CH DE FR GB LI SE**

(56) Entgegenhaltungen:
**BE-A- 690 090**
**DE-A-1 425 462**
**DE-A-1 425 557**
**DE-A-2 062 798**
**GB-A- 906 955**
**US-A-2 904 356**
**US-A-3 053 554**
**US-A-3 241 868**

(73) Patentinhaber: **BBC Brown Boveri AG**
**CH-5401 Baden (CH)**

(72) Erfinder: **Mares, Otakar, Dipl.-Ing.**
**Brisgistrasse 22**
**CH-5400 Baden (CH)**
Erfinder: **Ritter, Urs**
**Erlinsbacherstrasse 170**
**CH-4655 Stüsslingen (CH)**

Courier Press, Leamington Spa, England.

EP 0 058 439 B1

## Beschreibung

Die vorliegende Erfindung betrifft eine kardanische Rohr-verbindung mit Längsdehnungsausgleich nach dem Oberbegriff des Patentanspruch 1.

Bei Dampfturbinenanlagen mit Zwischenüberhitzung des Dampfes vor seinen Eintritt in den Niederdruckteil der Anlage besteht die leitende Verbindung zwischen dem Zwischenüberhitzer und der oder den Niederdruckturbinen gewöhnlich aus zwei oder drei Rohrabschnitten, deren Verbindungsglieder so ausgebildet sind, dass die Rohrabschnitte den von den Wärmedehnungen verursachten Längen- und Winkeländerungen möglichst ohne Widerstand nachgeben können. Üeblich ist die Verwendung dreier kardanisch beweglicher Verbindungselemente, von denen zwei am Zwischenüberhitzergehäuse bzw. am Gehäuse der Niederdruckturbine befestigt sind und das dritte, mittlere, die an den beiden ersten Verbindungselementen angeschlossenen Rohrabschnitte verbindet. Diese Bauart benötigt keinen Längenausgleich, da die Längenänderungen durch das frei verschiebliche mittlere Verbindungselemente aufgefangen wird.

Eine weitere übliche Bauart benötigt lediglich zwei Verbindungselemente, die am Turbinen- bzw. am Zwischenüberhitzgehäuse sitzen und durch ein einziges Rohr verbunden sind. Da die beiden Verbindungselemente hier räumlich fixiert sind, muss eines derselben die axiale Wärmedehnung des zwischen ihnen befindlichen Rohres ermöglichen. Dieses dafür vorgesehene Verbindungselement, ein sogenannter Universalkompensator, ist ein aufwendig gestalteter Bauteil mit konstruktionsbedingt grossem Platzbedarf in axialer Richtung der Verbindungsleitung zwischen der Turbine un dem Zwischenüberhitzer.

Diesen letztgenannten Nachteil hat die Verbindungsleitung mit Universalkompensator mit der erstgenannten Bauart mit drei kardanischen Verbindungsleitungen gemeinsam. Der grosse Platzbedarf der immer waagrecht angeordneten Verbindungsleitung bestimmt den Abstand zwischen Turbine und Zwischenüberhitzer, damit auch den Grundflächenbedarf für die Anlage und die Abmessung der Maschinenhalle.

Ein weiterer Nachteil des Universalkompensators besteht darin dass sein Verstellwiderstand, insbesondere gegen Querbewegungen, als Folge seiner die Rohrenden verbindenden Struktur, die ein Stangensystem aufweist, verhältnismässig gross ist, wodurch in Betrieb schädliche Verspannungen und damit Überbeanspruchungen auftreten können.

Die Hauptteile von winkel- und längsbeweglichen Rohrverbindungen stellen Kardangelenke mit Wellrohren dar, wobei letztere in Bereich des Kardangelenks zwischen den beiden zu verbindenden starren Rohren die Abdichtung übernehmen.

Eine solche kardanische Verbindung zweier Rohre mit dazwischen angeordnetem Wellrohr ist z.B. aus der US—A—2,904,356 bekannt. Dabei erlauben Langlöcher in einem sphärischen Kardanring für die Schwenkbolzen in den Gabelstükken der beiden Rohre für eine gewisse Längsverschieblichkeit der beiden Rohre gegeneinander. Geringe Querversetzungen der beiden Rohrachsen gegeneinander sind dabei infolge von Spielen in Richtung der Bolzenachsen ebenfalls möglich.

Für Dampfleitungen von ausserordentlich grossen Durchmessern, wie sie bei Dampfturbinenkraftwerken vorkommen, wäre eine solche kardanische Rohrverbindung unwirtschaftlich, da die Herstellung eines als Kugelzone ausgebildeten Kardanringes sowohl vom Ausgangsprodukt, einem Guss- oder Schmiederohling, als auch von der Bearbeitung her sehr aufwendig und teuer wäre.

Eine weitere, hauptsächlich für Wasser- und Abwasserrohre vorgesehene winkel- und längsbewegliche Rohrverbindung ist in der DE—A—20 62 798 beschrieben. Dabei sind einfache Laschen an einem der beiden zu verbindenden Rohrabschnitte mit gabelartigen Doppellaschen des anderen durch Bolzen in Langlöchern miteinander verbunden. Querversetzungen der Rohrachsen erlaubt diese Lösung nicht.

Die vorliegende, im kennzeichnenden Teil des Patentanspruchs 1 definierte Erfindung entstand aus der Aufgabe, eine Dampzuleitung für die Verbindung eines Zwischenüberhitzers mit einer Niederdruckturbine zu schaffen, die die vorerwähnten Nachteile der bekannten Ausführungen von Kompensatoren vermeidet und bei gleichem Dampfstrom bzw. gleichem Durchflussquerschnitt kürzere Baulängen als jene der bekannten Ausführungen erlaubt, um den Grundflächenbedarf der Turbinenanlage sowie die Maschinenhalle kleiner halten zu können, wodurch sich bedeutende Ersparnisse an Baukosten erzielen lassen.

Die Erfindung wird im folgenden anhand einiger in den Zeichnungen dargestellten Ausführungsbeispielen näher beschrieben. In den Zeichnungen stellen dar:

Fig. 1 schematisch eine Übersichtsskizze, aus der die Anordnung der mit gegenständlichen Rohrverbindungen zusammengekuppelten Verbindungsleitungen in einer Turbinenanlage hervorgeht,

Fig. 2 den Grundriss einer solchen Verbindungsleitung in vereinfachter Darstellung,

Fig. 3 ein Ausführungsbeispiel der erfindungsgemässen Rohrverbindung mit Ausgleichsflansch für die Längskraft in teilweise geschnittener Ansicht,

Fig. 4 den zu Fig. 3 gehörenden Grundriss, und die

Fig. 5 eine weitere Ausführung der Rohrverbindung mit Ausgleichsflansch.

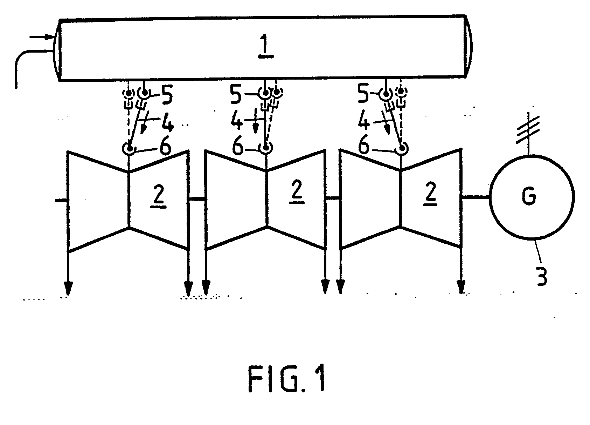

Fig. 1 zeigt schematisch den Niederdruckteil einer Dampfturbogruppe mit dem zugehörigen Wasserabscheider-Zwischenüberhitzer 1. Die drei Niederdruckturbinen 2, die zusammen mit den nicht dargestellten Mittel- und Hochdruckturbinen den Generator 3 antreiben, sind durch Dampfzuleitungen 4 mit dem Wasserabscheider-Zwischenüberhitzer 1 leitend verbunden. Zum Ausgleich der unterschiedlichen Wärmedehnungen der Anlagenkomponenten 1 und 2 und der Dampfzuleitungen 4 selbst müssen die zwei Rohrverbindungen 5 und 6 sowohl Winkelverlagerungen als auch Längenänderungen zulassen, um Verspannungen in der Struktur der Dampfzuleitungen und an den Anschlüssen derselben am Gehäuse des Wasserabscheider-Zwischenüberhitzers bzw. der Turbinen zu vermeiden.

Die Rohrverbindung 6, die in Fig. 1 an der jeweiligen Turbine sitzt, braucht nur räumliche Winkelverlagerungen zuzulassen, kann also als kardanische Rohrverbindung bekannter Bauart ausgebildet sein.

Bei der am Wasserabscheider-Zwischenüberhitzer vorgesehenen Rohrverbindung 5 handelt es sich um eine gemäss der vorliegenden Erfindung ausgeführte kardanische Rohrverbindung mit Längsdehnungsausgleich, was durch die Schiebemuffe in der schematischen Darstellung dieser Rohrverbindung zum Ausdruck kommt.

Natürlich könnte die Rohrverbindung 5 an der Stelle der Rohrverbindung 6 und umgekehrt angebracht sein.

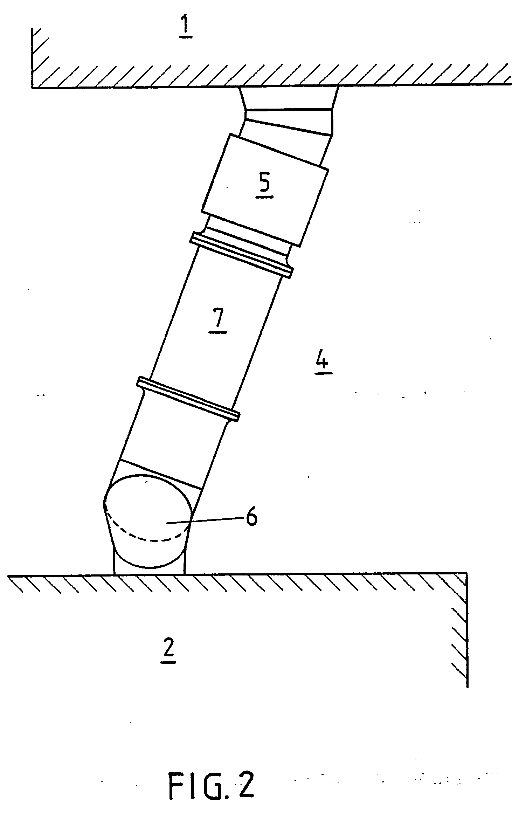

Fig. 2 zeigt den Umriss einer solchen Dampfzuleitung im Grundriss, woraus die Proportionen ihrer Einzelteile im Verhältnis zueinander ersichtlich sind. Bei der praktischen Ausführung enthält der zwischen den beiden Verbindungen 5 und 6 liegende mittlere Leitungsabschnitt 7 ein Absperrelement, das aber als nicht zur Erfindung gehörend nicht dargestellt ist.

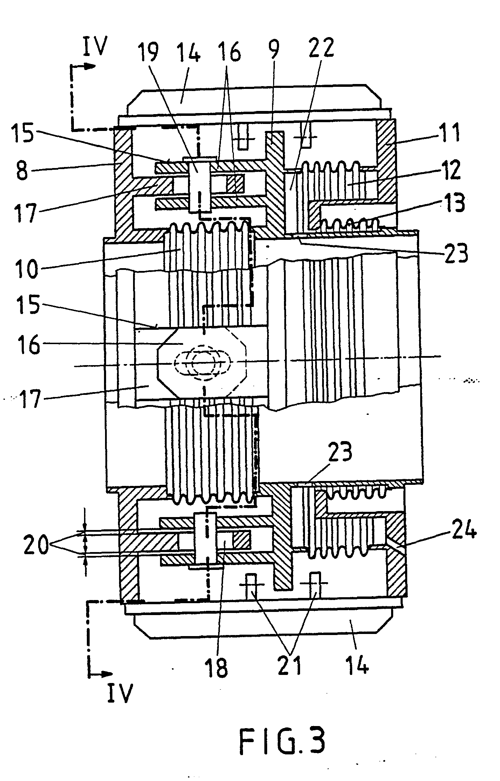

Ein konkretes Ausführungsbeispiel einer kardanischen Rohrverbindung mit Längsdehnungsausgleich zeigt die Fig. 3 in teilweise geschnittener Darstellung. Ein schmaler Bereich beiderseits der Längsachse ist in Ansicht dargestellt unter Weglassung von Stegen 14, deren Aufgabe unten beschrieben wird.

Ein überhitzerseitiger Flansch 89 und ein turbinenseitiger Flansch 9 sind durch ein überhitzerseitiges Wellrohr 10 verbunden.

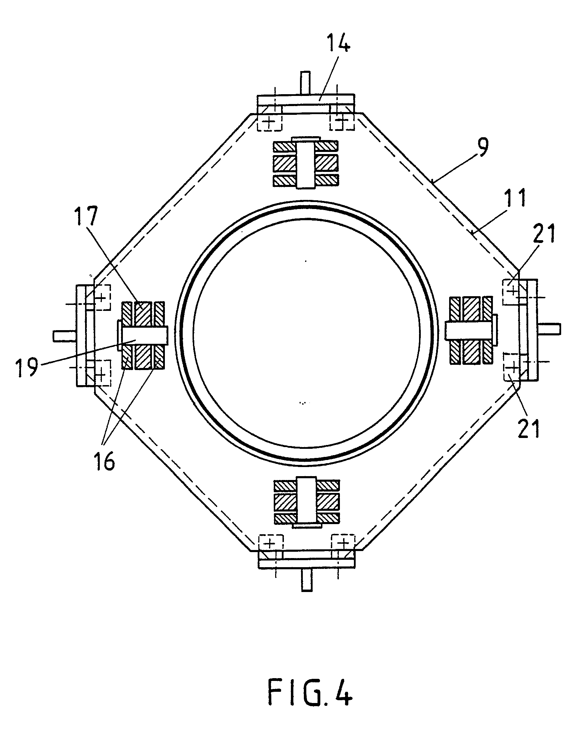

Ein weiterer, den turbinenseitigen Flansch umgebender Flansch 11 dient als Ausgleichsflansch für die aus dem Dampfdruck herrührende Längskraft und ist über ein Ausgleichswellrohr 12 und ein inneres, turbinenseitiges Wellrohr 13 mit dem turbinenseitigen Flansch 9 verbunden. Wie aus dem in Fig. 4 dargestellten Grundriss hervorgeht, der einen Schnitt gemäss dem in Fig. 3 eingetragenen Schnittverlauf IV—IV darstellt, sind die äusseren Umrisse der Flanschen 8 und 11 kongruent und ungleichseitig achteckig, wobei zwei jeweils benachbarte Seiten ungleich lang sind. Die vier kürzeren Seiten dieser Flanschen 8 und 11 sind durch achsparallele T-Profilstege 14 in etwa der Breite der kürzeren Achteckseiten miteinander verbunden. Somit bilden die Flanschen 8 und 11 mit den sie verbindenden Stegen 14 einen starren Rahmen, innerhalb dessen der turbinenseitige Flansch 9 und die Wellrohre 10, 12 und 13 gemäss der eingangs umschriebenen Aufgabenstellung innerhalb gewisser Grenzen schwenkbar, axial verschiebbar und quer zur Rohrleitungsachse versetzbar sind. Diese Grenzen sind bis zu einem gewissen Grad bestimmt durch die ohne Überlastung zulässige Verformbarkeit der Wellrohre. Um sie gegen eine Überbeanspruchung zu schützen, sind starre Anschläge in Form von vier radial einwärts der Stege 14 vorgesehenen Gabelgelenken 15, bestehend aus je zwei die Gabeln bildenden Gabellaschen 16, die mit dem turbinenseitigen Flansch 9 eine Einheit bilden, sowie je einer mit dem überhitzerseitigen Flansch 8 aus einem Stück bestehenden einfachen Lasche 17. Diese Laschen 17 sind mit Langlöchern 18 versehen, deren Breite grösser als der Durchmesser der Bolzen 19 ist und deren Länge mindestens so gross ist, dass die im Betrieb zu erwartenden maximalen Winkelausschläge sowie Axialverschiebungen nicht behindert werden.

Um bei dieser Ausführung Schwenkungen um die einander zugehörigen Bolzenpaare zu ermöglichen, muss zwischen den Gabellaschen 16 und den einfachen Laschen 17 ein ausreichendes Spiel 20 in Richtung der Bolzenachse vorgesehen sein.

Da die Breite der Langlöcher 18 grösser ist als der Durchmesser der Bolzen 19, so sind auch Versetzungen der Achsen der beiden Flanschen 8 und 9 möglich.

An den Stegen 14 sind Arretierungslaschen 21 vorgesehen, die zur Aufnahme von Schrauben dienen, mit denen der Flansch 9 gegenüber dem Flansch 8 während des Transports, bei Reparaturen etc., fixiert werden kann, um die Wellrohre zu entlasten.

Die Aufgabe des Ausgleichsflansches 11 besteht darin, die mit den Flanschen 8 und 9 verbundenen, nicht dargestellten Rohrabschnitten, die den Anschluss zum Wasserabscheider-Zwischenüberhitzer bzw. zum Turbinengehäuse herstellen, in bekannter Weise kraftfrei zu halten. Zu diesem Zweck sind die achsparallelen Projektionen der Ausgleichskammer 22, die vom turbinenseitigen Flansch 9, dem Ausgleichsflansch 11, dem Ausgleichswellrohr 12 und dem turbinenseitigen Wellrohr 13 begrenzt wird, Ringflächen, die flächengleich sind dem Durchflussquerschnitt der Dampfzuleitung. Somit heben sich die auf den Wasserabscheider-Zwischenüberhitzer und die Turbine einerseits sowie auf den Ausgleichsflansch 11 bzw. den turbinenseitigen Flansch andererseits wirkende Kräfte aus dem Dampfdruck auf und eliminieren damit die entsprechenden Reaktionen auf die Fundamente von Wasserabscheider-Zwischenüberhitzer bzw. Turbine.

Die Ausgleichskammer 22 kommuniziert mit der Dampfzuleitung über einige über den Umfang verteilt angeordnete Ausgleichsbohrungen 23. An der tiefsten Stelle der Ausgleichskammer ist eine Wasserablassbohrung 24 zum Entfernen des Kondensats vorhanden.

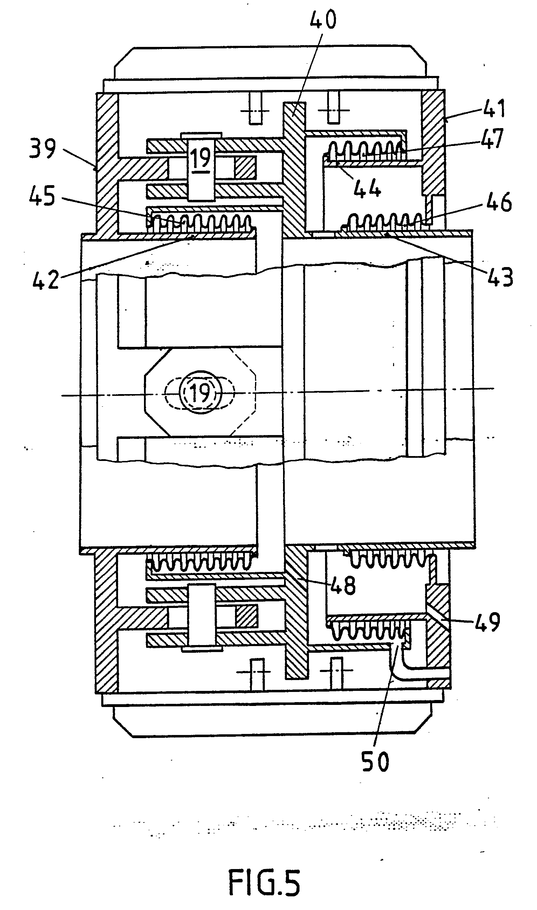

Die Fig. 5 zeigt eine Variante mit Längskraftausgleich, die bezüglich der Elemente für die kardanische Lagerung der Ausführung nach den Fig. 3 und 4 entspricht. Es sind also alle vier Bolzen in Langlöchern gelagert. Diese Ausführung unterscheidet sich aber gegenüber der letztgenannten durch geänderte Flanschen 39, 40 und 41. Diese weisen jetzt Stützringe 42, 43 und 44 auf und die Wellrohre 45, 46 und 47 sind so zwischen den entsprechenden Flanschen 39 und 40 bzw. 40 und 41 eingespannt, dass sie durch den Dampfdruck jeweils radial nach innen beansprucht werden. Die Stützringe stützen sie gegen Überbeanspruchung, der Hauptzweck dieser Massnahmen besteht aber in der Vermeidung von Wasseransammlungen an den tiefsten Stellen der drei Wellrohre und der dadurch verursachten Durchbeigung. Die Entwässerungslöcher 48, 49 und 50 können dadurch im massiven Material der drei Flanschen vorgesehen werden.

Die Verwendung solcher Rohrverbindungen beschränkt sich nicht auf den hier beschriebenen Anwendungsfall bei Turbinenanlagen. Sie eigenen sich grundsätzlich für alle druckführenden, insbesondere wärmebeanspruchten Leitungen, bei denen eine freie Ausdehnungsmöglichkeit unerlässlach ist.

## Patentansprüche

1. Kardanische Rohrverbindung mit Längsdehnungsausgleich, mit Flanschen (8, 9) zum Anschluss der zu verbindenden Rohrleitungsabschnitte und mindestens einem Wellrohr (10, 12; 45, 47) zwischen diesen Flanschen (8, 9), das eine gegenseitige Längsverschiebung der Flanschen (8, 9) gestattet, sowie mit einem Kardangelenk (5) mit zwei Bolzenpaaren, das Winkelbewegungen der Flanschen (8, 9) relativ zueinander ermöglicht, dadurch gekennzeichnet, dass beide Bolzenpaare (19/19) in Gabellaschen (16) des einen Flansches (9) praktisch spielfrei und in einfachen Laschen (17) des anderen Flansches (8) in Langlöchern (18) längsverschieblich delagert sind, deren grosse Achsen parallel zur Längsachse der zu verbindenden Rohrleitungsabschnitte orientiert sind, und dass die einfachen Laschen (17) innerhalb der Gabellaschen (16) ein erhebliches Spiel (20) in Richtung der Bolzenachsen aufweisen und die Breite der Langlöcher (18) grösser ist als der Durchmesser der Bolzen (19) (Fig. 3, 4 bzw. 13).

2. Kardanische Rohrverbindung nach Anspruch 1, mit einem an sich bekannten Ausgleichsflansch (11) zur Kompensation der Längskräfte aus dem Innendruck, dadurch gekennzeichnet, dass der Ausgleichsflansch (11) mit dem von ihm entfernter liegenden Flansch (8) durch Stege (14) am äusseren Umfang der Rohrverbindung starr verbunden ist (Fig. 3; 5; 13).

## Revendications

1. Liaison à carbon pour tuyaux avec compensation de la dilatation longitudinale, avec des brides (8, 9) pour le raccordement des tronçons de conduites tubulaires à réunir et au moins un tube ondulé (10, 12; 45, 47) entre ces brides (8, 9), qui autorise un glissement longitudinal mutuel des brides (8, 9), ainsi qu'avec une articulation à cardan (5) avec deux paires de tourillons, qui permet des mouvements angulaires des brides (8, 9) l'une par rapport à l'autre, caractérisée en ce que les deux paires de tourillons (19/19) sont logées pratiquement sans jeu dans des colliers doubles (16) d'une première bride (9) et peuvent glisser longitudinalement dans des trous allongés (18) ménagés dans des colliers simples (17) de l'autre bride (8), les grands axes de ces trous étant parallèles à l'axe longitudinal des tronçons de conduites tubulaires à réunir, et en ce que les colliers simples (17) présentent, à l'intérieur des colliers doubles (16), un jeu important (20) dans la direction des axes des tourillons et que la largeur des trous allongés (18) est plus grande que le diamètre des tourillons (19) (Fig. 3, 4).

2. Liaison à carden pour tuyaux suivant la revendication 1, avec une bride de compensation (11) en soi connue pour la compensation des efforts longitudinaux dus à la pression interne, caractérisée en ce que la bride de compensation (11) est rigidement assemblée à la bride (8) éloignée d'elle au moyen de semelles (14) placées à la périphérie extérieure de la liaison pour tuyaux.

## Claims

1. Universal pipe connection with compensation of longitudinal expansion, with flanges (8, 9) for the attachment of the pipe sections to be connected and at least one corrugated pipe (10, 12; 45, 47) between these flanges (8, 9), which permits a mutual longitudinal displacement of the flanges (8, 9), also with a universal joint (5) with two pairs of bolts which permits mutually relative angular movements of the flanges (8, 9), characterized in that both pairs of bolts (19/19) are mounted virtually without play in fork straps (16) of the one flange (9) and with longitudinal sliding mobility in single straps (17) of the other flange (8) in slots (18), the major axes of which are oriented parallel to the longitudinal axis of the pipe sections to be connected, and that the single straps (17) exhibit substantial play (20) in the direction of the bolt axes within the fork straps (16) and the width of the slots (18) is greater than the diameter of the bolt (19) (Figs. 3, 4 and 13).

2. Universal pipe connection according to Claim 1, with a compensating flange (11), known per se, for the compensation of the longitudinal forces due to the internal pressure, characterized in that the compensating flange (11) is connected rigidly to a flange (8) located more remotely from it by webs (14) on the outer circumference of the pipe connection (Figs. 3; 5; 13).

FIG. 1

FIG. 2

FIG.3

FIG. 4

FIG.5